# EUROPEAN PATENT SPECIFICATION

(11) **EP 2 626 649 B1**
(45) Date of publication and mention of the grant of the patent: **21.03.2018**
(21) Application number: 13000714.9
(22) Date of filing: 12.02.2013
(51) Int. Cl.: F24J 2/04, F24J 2/54, H01L 31/042, H02S 20/32, H02S 20/22

(54) **Screens with arranged solar modules and independently controlled intermediate screens**
Blenden mit angeordneten Solarmodulen und unabhängig gesteuerten Zwischenblenden
Écrans dotés de modules solaires organisés et écrans intermédiaires commandés indépendamment

(30) Priority: 13.02.2012 SI 201200041
(43) Date of publication of application: 14.08.2013
(73) Proprietor: Fibernet, d.o.o., 1000 Ljubljana (SI)
(72) Inventor: Skok, Iztok, 3000 Celje (SI)
(74) Representative: Pipan, Marjan

(56) References cited:
- EP-A1- 2 375 186
- KR-A- 20110 011 152
- US-A1- 2010 175 741
- US-A1- 2011 073 161

## Description

The subject of the invention is screens with arranged solar modules and independently controlled intermediate screens fixed to an external construction arranged on south-facing buildings. The invention belongs to the field of obtaining electricity from renewable resources.

When capturing solar energy on vertical walls of buildings we come across a problem of utilizing sunrays, because the angle of sunlight changes during a day and also during the summer's highest angle on June 21^{st} and the winter's highest angle on December 21^{st} when the sun is the lowest in the sky; we also come across a problem of capturing sunrays to a solar module, as shading of high-capacity solar modules reduces the power of a module by up to 80 %.

The technical problem solved by the present invention is utilization of south-facing vertical sides of buildings in order to capture solar energy by means of an arrangement of high-capacity solar modules onto an external construction on buildings that is also intended for shading the buildings in order to make an optimal utilization of a building's surface and solar modules.

Shading systems are known on the market, especially on buildings having plenty of glass surfaces, and are not part of the invention, neither are solar modules.

Patent document US 2007/0056579 A1 discloses a construction characterized by movable solar modules. It requires a special construction that makes use of movable solar modules on the roof of a building to capture sunlight or to let the daylight to pass through into the building interior thus utilizing solar and heat energy. Solar modules are fixed into the construction. A special construction that is part of the building is used for fixing the modules. It also takes into account cooling, heating of modules; the energy of the sun is directed via reflection to solar cells. A drawback of the system lies in the fact that it fails to take account of mutual distances between individual solar modules and consequently the modules are shaded, what indirectly leads to a reduced power of the module; the system is very complex and therefore subject to failures, it calls for specially produced constructions and discloses that installation can only be done on new buildings.

A solution from US 2011/0061711 A1 is also known. It has solar modules within a housing that are inclined towards an optimal angle of the sun; it also takes account of distances between the modules due to shading, yet it is not controlled in a way to follow the sun as it is disposed within the housing at a predetermined angle. Solar modules are closed within housings.

There are also known solutions, in which solar modules are disposed in a vertical position. US 7,845,127 B1 discloses a construction that utilizes too little sunlight due to a small angle of incidence of the sunlight to the solar module which is part of a façade of a building.

From US 2011/073161 document a high efficiency, environmentally friendly system comprising a plurality of photovoltaic solar collecting panels (PV panels) is disclosed. The system comprises an outer frame to which a plurality of inner frames are mounted to which the plurality of PV panels are attached. To minimize shadowing by the outer frame upon one or more PV panels, at least one PV panel may extend beyond an endpoint of the main frame. The system also comprises an outer frame rotation actuator that rotates the outer frame and an inner frame rotation actuator that rotates the inner frames and the plurality of PV panels.; The solar tracking array frames disclosed herein help to improve the quality of the environment by conserving a variety of energy resources (e.g., fossil fuels, hydroelectric energy, etc.) The solar tracking array frames disclosed herein also help to reduce greenhouse gas emissions, as solar tracking array frames do not produce carbon dioxide byproducts. Sistem describes the construction of the mount photovoltaic, which rotate about an axis and in this way optimize the amount of the sun's rays on photovoltaic screens. The rotation is along the vertical axis. The disadvantage of this system is that the structure according to the season of the sun as inflexible. Our innovation utilizes different angle of the sun throughout the year, spacing screens are such as to prevent shading screens with photovoltaic, while cooling facility with additional intermediate screens.

EP 2 375 186 document explain the device with solar panels (1) i.e. photovoltaic panels, coupled to a support structure (2). A drive unit drives the panels in displacement, for passing the panels from a coplanar configuration to an inclined configuration. The panels are movable with respect to the structure at a coupled state, along a direction (D) that is orthogonal to a pivoting axis i.e. North-south axis, of the panels and parallel to a reference plane in a closing/spacing direction of the panels, for passage of the panels between closed and spaced positions in respective co-planar and inclined configurations. The device described the construction of photovoltaic displays, coupled to the supporting structure. The screens are removable on both axes , and adaptable to the position of the sun, but does not take into account the shadows on the screen that occurs , when the sun is at its highest position, the screen each shade, which reduces their capacity for up to 80%. Contrary our innovation takes into account the highest position of the sun, so the screens with photovoltaics at a distance that prevents both shading, intermediate screens serving shading object, but are controlled separately and depart the sun's rays, thus preventing senčnje screens with photovoltaics

In the US 2010/175741 document apparatus for adjusting the position of the photovoltaic panels are disclosed. The adjustments of the photovoltaic panels can be performed in two axes: pivot and tilt. The photovoltaic panels can be pivotably mounted along the longitudinal axis of rotatable frames. The substantially parallel photovoltaic panels in a frame can be simultaneously pivoted by a pivoting drive mechanism attached to the frame. Multiple tiltable frames can be arranged in parallel to each other, thus creating a 2-D matrix of the photovoltaic panels. The tiltable frames can be supported by an elevated structure permitting the unobstructed rotation of both the frames and the panels inside the frames. A controller can synchronize the tilt and pivot, such that the combined rotation of the photovoltaic panels results in the photovoltaic panels of the entire array being substantially perpendicular to the incident solar radiation. Apparatus use a method of control of photovoltaic displays in the structure, where they are mounted horizontally. Control of the axis and the support frames in which the screen is clamped by fotovoltaik rotation drive. Apparatus does not take into account the spacing to prevent shading of adjacent photovoltaic screens, so the advantage is smaller. Our innovation takes into account spaces and a specificity of intermediate screens, intended primarily for vertical walls of buildings and designed in such a way shading structures, such as the exploitation of solar energy. The advantage is also that exploits the structure for shading objects that are already on the market and only need necessary adjustment.

KR 2011 0011152 documents describe an awning system for collecting and controlling solar energy is provided to improve the energy efficiency of a building by controlling solar energy flowing into the inside the building, which comprises a light collecting part(100) and a support part(200). The light collecting part comprises a light collecting panel (102). The light collecting panel collects energy from the sum and converts the energy into heat or electricity. The light collecting part is vertically rotated depending on a solar altitude. The support part is connected to the light collecting part and supports the light collecting part. The supporting part is attached on a building.

Decscribed Innovation is primarily intended for building shading and shadow screens can also be used for recovery of heat and electricity. The screen as it can move. The advantage of our innovation, in that the screens are controlled so as to take advantage of the optimal surface area of the building. The spacing between the screens are placed in latitude. Intermediate screens provide additional shading and are controlled independently of screens with photovoltaics.

A solution to the set technical problem of utilizing south-facing buildings for obtaining electricity by means of solar modules of the invention lies in that two existing systems, namely shading of buildings and obtaining of electricity by means of solar modules 1, are combined to a new system. It uses the same construction 6 and allows an optimal utilization of solar energy in direction 4 and simultaneously also cooling of the building as screens 2 with solar modules 1 follow the trajectory of the sun along a horizontal axis of fixation.

The invention will be explained in more detail in the continuation by way of an embodiment and drawings representing in:

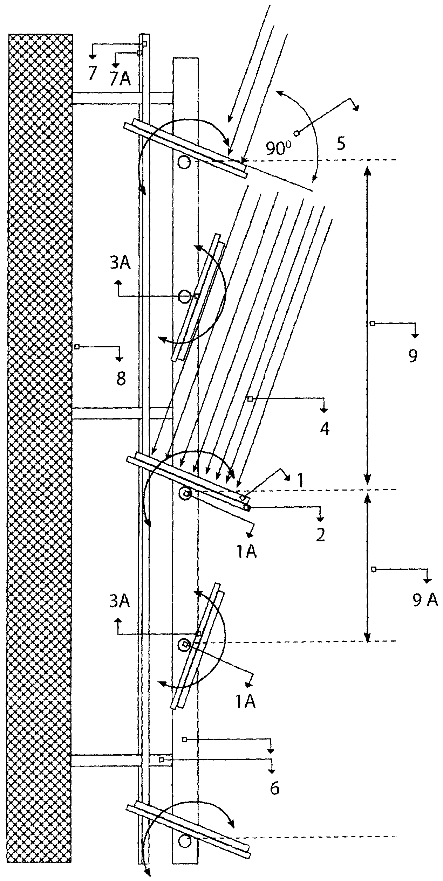

- Figure 1: side view of fixation of solar modules to a wall of a building, fixation of screens with solar modules onto a construction, rotation and control of the screens with solar modules, intermediate screens for shading and a removal of an intermediate shading screen to a position on June 21^{st}, when the sun is the highest in the sky at a certain latitude;

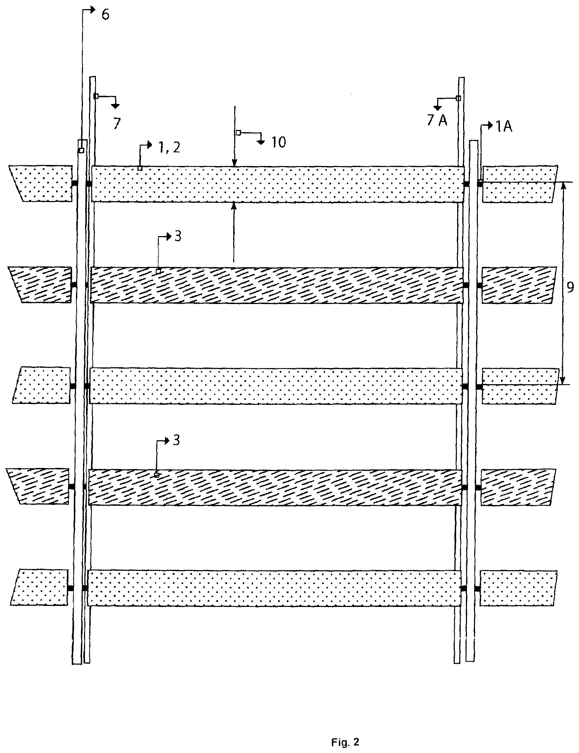

- Figure 2: front view of a construction mounted to a wall of a building; it shows screens with solar modules and shading screens, their fixation along the axis to the external construction and their arrangement on a wall of a building;

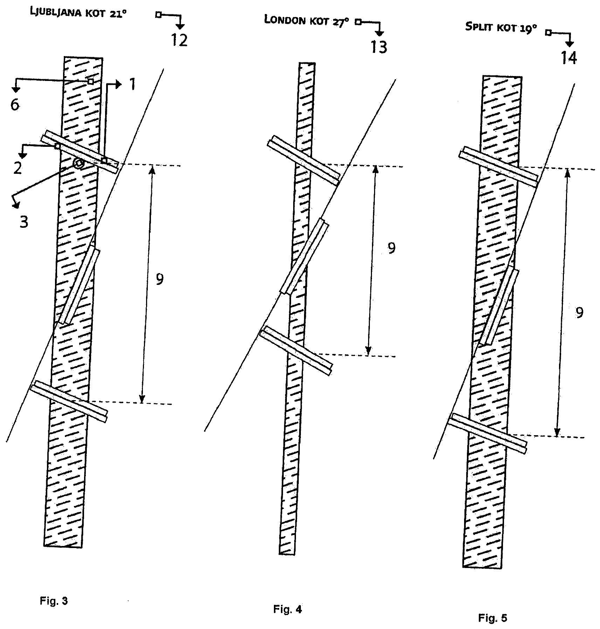

- Figure 3: position of a screen with a solar module and a removed intermediate screen on June 21^{st} when the sun is the highest Ljubljana 21°, this date is the basis for the determination of distances between the screens with solar modules, intermediate screens are predominantly intended for shading and are mounted between two screens with a solar module;
- Figure 4: position of a screen with a solar module and a removed intermediate screen on June 21^{st} when the sun is the highest London 27°, this date is the basis for the determination of distances between the screens with solar modules, intermediate screens are predominantly intended for shading and are mounted between two screens with a solar module;
- Figure 5: position of a screen with a solar module and a removed intermediate screen on June 21^{st} when the sun is the highest Split 19°, this date is the basis for the determination of distances between the screens with solar modules, intermediate screens are predominantly intended for shading and are mounted between two screens with a solar module.

A shading screen 2, on which a solar module 1 and an intermediate shading screen 3 are arranged allows for an economical utilization of solar energy in direction 4, south-facing vertical sides of objects 8, and simultaneous shading/cooling of buildings. The intermediate screen 3 is controlled independently of the screen 2 with the solar modules 1 on a same construction 6. By combining two systems into one on the same construction 6 the costs are reduced and a yield of investment is increased.

Screens 2 with solar modules 1 are mutually connected to sets and controlled by a lever 7. The screens 2 are movable along the axis that adjusts the position of the screens 2 with solar modules 1 to optimal capturing of sunrays in direction 4. The intermediate screens 3 that are predominantly intended for shading of a building are mounted between two screens 2 with solar modules 1 and also connected with a lever 7A in sets and controlled independently of the screens 2 with solar modules 1, because in a case when due to a sun position when the shading screen 3 is under an angle that would shade the screen 2 with the solar module 1, the solar modules 1 rotate to a position that prevents shading of the lower screen 2 with the solar module 1. The system takes account of the distance between the screens 2 with solar modules 1, said distance depending on the latitude, on which a building with the screens of the invention is positioned (e. g. Ljubljana at an angle of 21°, London at an angle of 27°, Split at an angle of 19°), and of a width of the screen 2 with a solar module 1, whereas the setting is the position on June 21^{st}, when the sun is the highest in the sky.

A distance between two screens 2 with a solar module 1 must be set in a way that the upper screen 2 with a solar module 1 on that day does not shade the lower screen 2 with the solar module 1. The intermediate module 3 predominantly intended for the shading of a building is mounted between two screens 2 with solar modules 1 and is shifted on June 21, when the sun is the highest in the sky, to a position that prevents the shading of the screen 2 with the solar module 1 (Figure 1) and then gradually returns to a shading position so that it never shades the screen 2 with the solar module 1, as shading of the solar module 1 reduces the yield by up to 80 %.

The screen 2 with an arranged solar module 1 follows the sun trajectory by being continuously directed by a control of the lever 7 as perpendicularly as possible to the incident sunrays in direction 4 on the solar module 1. The intermediate screen 3 is controlled in a way that in the case when the shading screen 3 shaded the screen 2 with the solar module 1, it moves to a position 3A that prevents it. The distances 9 between individual solar modules 1 with a controlled lever 7 and independently controlled intermediate modules 3 on the construction 6 depend on the latitude of a place of setting as at June 21^{st} (positions 12, 13, 14 on Figures 3, 4, 5) and a width 10 of the solar module 1.

The constructional solution of the invention has two controls on the same construction with various guides, one with a set of screens 2 with solar modules 1 and another that controls independent intermediate screens 3 in order to prevent shading of the screens 2 with solar modules 1 and shading of the building. The intermediate screen 3 can also have solar modules arranged, yet the yield is smaller as the intermediate screen is exposed to the sun for a shorter period of time. The intermediate screen 3 can be made of another material intended for another purpose. The width of the intermediate screens 3 depends on the possibilities of the construction of the building, and the length depends on the structure of the construction of the building, the quality of the materials used, and the size of the solar cells. Recommended dimensions are: the width of the screen 2 with a solar module 1 from 20 to 60 cm, and the length up to 400 cm. Buildings closer to Earth poles have a better yield of obtaining electricity by means of solar modules due to a lower incidence angle as to a square metre of south-facing walls of a building. Controlled screens 2 with solar modules 1 arranged on a construction of a south-facing wall of a building that follow the angle of the sun increase the yield of the solar module for up to 40 % in comparison to a stationary screen assuming the same position the whole year through.

An advantage of use of the screen of the invention is in that known constructions intended for the shading of buildings are used and that a new product that is simultaneously the shading screen 2 and a solar module 1 is used together with intermediate shading screens 3, on which solar modules can also be arranged in order to more efficiently use the energy of the sun on vertical walls of buildings, and at the same time the same construction is used to shade, cool the building. The screens 2 with solar modules 1 and intermediate shading screens 3 are fixed in the construction along the axis in sets controlled independently lever's 7,7A and spaced by factors 12, 13, 14 that as at June 21^{st}, when the sun is the highest in the sky, prevent shading of the solar modules. The intermediate shading screens 3 are set to a position, in which they do not shade the screens 2, as their function is to shade the building and to allow a full operation of solar modules. Even the existing constructions can be converted to powerful units for obtaining electricity by arranging new screens with solar modules and intermediate modules at proper mutual distances. In case of hail or snowing, the screens can be set to a vertical position thus preventing damaging of the solar module or malfunctioning due to the solar module being covered in snow. The screens with solar modules and the shading screens can further be used for advertising purposes: advertising material can be arranged on bottom sides of the screens and displayed in the time when no electricity is obtained and the building is not shaded.

### Reference numbers

- 1: solar module
- 1A: rotation axis of a shading screen and a screen with a solar module
- 2: screen
- 3: intermediate screen
- 3A: intermediate shading screen in a position, in which shading of the solar module is prevented
- 4: direction of sunrays
- 5: incidence angle of direction 4 of sunrays to the solar module 1
- 6: carrier construction for the screens for shading and obtaining electricity
- 7: lever for the control of the screen with a solar module
- 7A: lever for the control of an intermediate screen
- 8: wall of a building
- 9: distance between an individual screen and a solar module
- 9A: distance between a screen with a solar module and an intermediate screen
- 10: width of the solar module on the screen
- 11: inclination angle depending on the latitude
- 12: position of the screen with solar modules - Ljubljana
- 13: position of the screen with solar modules - London
- 14: position of the screen with solar modules - Split

## Claims

1. A system comprising screens with arranged solar modules and independently controlled intermediate screens, where the said screens are placed horizontally for shading of buildings, **characterized in that,** the screens (2) with arranged solar modules (1) and the intermediate screens (3) are arranged alternately and guided in the same construction (6) with levers (7,7A) and where the angle of the screens (2) with arranged solar modules (1) is controlled by a first lever (7) such that the screens (2) follow the trajectory of the sun by being rotated along a horizontal axis (1a) and the angle of the intermediate screens (3) is controlled by a second lever (7A).

2. A system according to claim 1,
**characterized in that,**
the angle of the screens (2) with arranged solar modules (1) is controlled in such way that it is perpendicular as possible to the incident sunrays and the angle of the intermediate screens (3) is controlled to shaddow the building and not to shadow the screens (2) with arranged solar modules (1).

3. A system according to claim 1 and 2
**characterized in that,**
the distance (9) between the adjacent screen (2) with arranged sollar modules (1) ranges from 200 to 600 mm.

## Patentansprüche

1. System, umfassend Blenden mit angeordneten Solarmodulen und unabhängig gesteuerten Zwischenblenden, wobei die Blenden zum Beschatten von Gebäuden horizontal angebracht sind,
**dadurch gekennzeichnet, dass**
die Blenden (2) mit den angeordneten Solarmodulen (1) und den Zwischenblenden (3) abwechselnd angeordnet und in der gleichen Konstruktion (6) mit Hebeln (7, 7A) geführt werden und wobei der Winkel der Blenden (2) mit den angeordneten Solarmodulen (1) durch den ersten Hebel (7) derart gesteuert wird, dass die Blenden (2) dem Lauf der Sonne durch Rotation entlang der horizontalen Achse (1a) folgen und der Winkel der Zwischenblenden (3) durch einen zweiten Hebel (7A) gesteuert wird.

2. System nach Anspruch 1,
**dadurch gekennzeichnet, dass**
der Winkel der Blenden (2) mit den angeordneten Solarmodulen (1) derart gesteuert wird, dass er senkrecht zu den einfallenden Sonnenstrahlen und dem Winkel der Zwischenblenden steht, um das Gebäude zu beschatten und der Winkel der Zwischenblenden (3) zur Beschattung des Gebäudes und nicht zur Beschattung der Blenden (2) mit den angeordneten Solarmodulen (1) gesteuert wird.

3. System nach Ansprüchen 1 und 2
**dadurch gekennzeichnet, dass**
der Abstand (9) zwischen den benachbarten Blenden (2) mit den angeordneten Solarmodulen (1) im Bereich von 200 bis 600 mm liegt.

## Revendications

1. Un système comprenant des écrans dotés de modules solaires organisés et des écrans intermédiaires commandés indépendamment, lesdits écrans étant placés horizontalement pour ombrager les bâtiments,
**caractérisé en ce que**
les écrans (2) dotés de modules solaires (1) et les écrans intermédiaires (3) sont disposés en alternance et guidés dans la même construction (6) avec des leviers (7, 7A) et où l'angle des écrans (2) dotés de modules solaires (1) organisés est commandé par un premier levier (7), de telle sorte que les écrans (2) suivent la trajectoire du soleil en étant mis en rotation le long d'un axe horizontal (1A) et l'angle des écrans intermédiaires (3) est commandé par un deuxième levier (7A).

2. Système selon la revendication 1,
**caractérisé en ce que**
l'angle des écrans (2) dotés de modules solaires (1) organisés est commandé de manière à être le plus perpendiculaire possible par rapport au rayonnement solaire incident et l'angle des écrans intermédiaires (3) est commandé pour ombrager le bâtiment et ne pas ombrager les écrans dotés de modules solaires (1) organisés.

3. Système selon les revendications 1 et 2
**caractérisé en ce que**
la distance (9) entre écrans adjacents (2) dotés de modules solaires (1) organisés varie de 200 à 600 mm.
